# EUROPEAN PATENT APPLICATION

(11) **EP 4 007 033 A1**
(43) Date of publication of application: **01.06.2022**
(21) Application number: 20925962.1
(22) Date of filing: 11.11.2020
(51) Int. Cl.: H01M 10/0585, H01M 10/0525, H01M 10/0562, H01M 10/0565

(54) **ALL-SOLID-STATE LAMINATED BATTERY**

(30) Priority: 19.03.2020 CN 202010195782
(71) Applicant: Suzhou Qingtao New Energy S&T Co., Ltd., Suzhou, Jiangsu 215334 (CN)
(72) Inventor: LI, Zheng, Suzhou, Jiangsu 215334 (CN); FENG, Yuchuan, Suzhou, Jiangsu 215334 (CN); HE, Hongcai, Suzhou, Jiangsu 215334 (CN); ZHOU, Ke, Suzhou, Jiangsu 215334 (CN); WANG, Dandan, Suzhou, Jiangsu 215334 (CN); YANG, Fan, Suzhou, Jiangsu 215334 (CN)
(74) Representative: Bayramoglu et al.
(86) International application number: PCT/CN2020/128148
(87) International publication number: WO 2021/184782

(57) **Abstract**

The present application relates to an all-solid-state laminated battery, which comprises a positive electrode, a negative electrode, and a solid-state electrolyte layer arranged between the positive electrode and the negative electrode. A bonding layer is provided outside of the edges of the negative electrode, of the solid-state electrolyte layer, and of the positive electrode. The bonding layer comprises an insulating thermally-conductive material.

## Description

### Technical field

The present application belongs to the field of solid-state batteries and relates to an all-solid-state laminated battery.

### BACKGROUND

In recent years, all-solid batteries, which replace electrolyte with solid electrolyte to improve safety, have attracted special attention. Among the all-solid batteries, various developments related to the all-solid battery stacks are disclosed. Meanwhile, in order to improve the energy density of all-solid batteries, JP2017220447A discloses an all-solid battery, which uses a resin layer to cover only the sides of the all-solid battery laminate instead of the outer package. In the all-solid battery laminate, at least one of the current collector layer, the positive electrode mixture layer, the solid electrolyte layer and the negative electrode mixture layer protrudes outward as a protrusion compared with other layers, and a plurality of protrusions protrude from the side surface of the laminated battery.

Since the resin layer and the protrusion are bonded to each other, the outer package can be omitted in the overall installation of the battery, which improves the energy density of the battery itself. However, the bonding strength between the resin layer and the overall battery is not strong. In particular, the resin layer is easy to fall off due to volume expansion during the use of the negative electrode, and the resin itself is an insulating and thermal insulation material, so the heat generated during the use of the battery cannot be discharged in time.

CN108695548A discloses a laminated all-solid-state battery, which has a plurality of all-solid-state batteries. The all-solid-state batteries respectively have: a positive electrode layer, which has a positive electrode current collector and a positive electrode active substance layer containing a positive electrode active substances formed on the positive electrode current collector; a negative electrode layer, which has a negative electrode current collector and a negative electrode active substance layer containing negative electrode active substances formed on the negative electrode current collector; and a solid electrolyte layer, which disposed between the positive electrode active substance layer and the negative electrode active substance layer and comprising a solid electrolyte with lithium ion conductivity. The plurality of all-solid-state batteries are laminated, and the plurality of all-solid-state batteries include two all-solid-state batteries adjacent to each other, and the positive electrode collector of one of the two all-solid-state batteries is directly bonded with the negative electrode collector of the other all-solid-state battery. CN107591568A discloses a preparation method for a laminated all-solid-state lithium ion battery. It is prepared layer by layer, combined with soft baking and pressure-preserving baking, it realizes the compact combination of the positive and negative electrodes with the electrolyte layer; which reduces the solid-solid interface impedance and intergranular impedance, and has certain plasticity. The laminated all-solid-state battery has poor heat dissipation performance during use, which affects the service performance of the battery.

Therefore, it is still of great significance to develop an all-solid-state laminated battery with excellent heat dissipation performance and service performance.

### Summary

The purpose of the application is to provide an all-solid-state laminated battery, which comprises a positive electrode, a negative electrode and a solid-state electrolyte layer arranged between the positive electrode and the negative electrode. A bonding layer is provided outside the edges of the negative electrode, of the solid electrolyte layer and of the positive electrode. The bonding layer contains insulating and thermally-conductive material, which can obviously improve the thermal conductivity of the bonding layer, so that the heat generated by the all-solid-state laminated battery during use can be quickly dissipated through the bonding layer, thereby improving the cycle performance of the all-solid-state laminated battery.

To achieve the purpose of the application, the application adopts the following technical scheme.

The application provides an all-solid-state laminated battery, which comprises a positive electrode and a negative electrode which are oppositely arranged, and a solid-state electrolyte layer which is positioned between the positive electrode and the negative electrode. A bonding layer is provided outside the edges of the negative electrode, of the solid electrolyte layer and of the positive electrode. The bonding layer comprises insulating and thermally-conductive material.

The all-solid-state laminated battery of this application adopts the above structure and composition, so that the heat generated in the use process of the all-solid-state laminated battery can be quickly dissipated, thereby improving the service performance of the all-solid-state laminated battery and prolonging its service life.

Optionally, the number of layers of the positive electrode is more than or equal to 2 layers, such as 2 layers, 3 layers, 4 layers, 5 layers or 6 layers, etc.

Optionally, the number of layers of the negative electrode is more than or equal to 2 layers, such as 2 layers, 3 layers, 4 layers, 5 layers or 6 layers, etc.

Optionally, the negative electrode comprises a first negative electrode and second negative electrodes which are respectively positioned on both sides of the edge of the first negative electrode, and the cross-sectional area of the second negative electrodes are less than that of the first negative electrode.

Here, the both sides of the edge of the first negative electrode refer to the sides corresponding to the two ends of the first negative electrode which are perpendicular to the length direction of the first negative electrode.

The ratio of the length of the first negative electrode to the length of the second negative electrodes can be adjusted according to the usage and design of the battery and other factors.

In combination with the influence of the electrochemical and mechanical properties of the battery, optionally, the length of the second negative electrodes are 20%-60% of that of the first negative electrode, such as 25%, 30%, 35%, 40%, 45%, 50% or 55%, etc.

Optionally, the thickness of the first negative electrode is greater than that of the second negative electrodes.

In the present application, it is defined that the cross-sectional area of the first negative electrode is greater than that of the second negative electrodes, wherein the cross-sectional area refers to the area of the cross-section which is perpendicular to the length direction of the negative electrode.

Optionally, the solid-state electrolyte layer comprises a first solid-state electrolyte which is positioned between the positive electrode and the first negative electrode and a second solid-state electrolyte which is positioned between the positive electrode and the second negative electrodes, and the roughness of the second solid-state electrolytes are greater than that of the first solid-state electrolyte.

Optionally, the thickness of the second solid-state electrolytes are greater than that of the first solid-state electrolyte.

The roughness of the first solid-state electrolyte corresponding to the first negative electrode is smaller, which reduces the problems that the battery is easy to short-circuit and the overall impedance of the battery is large due to the large roughness of the solid-state electrolyte. The roughness of the second solid-state electrolytes corresponding to the second negative electrodes is greater, which avoids the problems of weak adhesion between electrode and solid-state electrolyte due to the too small roughness of solid-state electrolyte in the design of existing all- solid-state batteries.

By the design of the first negative electrode, the second negative electrodes, the first solid-state electrolyte and the second solid-state electrolytes, the dilemma of the roughness design of the solid-state electrolyte in the prior technology is overcome.

The following are optional technical solutions of the present application, but not as a limitation to the technical solutions provided by the present application. The technical purpose and beneficial effects of the present application can be better achieved through the following optional technical solutions.

As an optional technical solution of the present application, the second negative electrodes are positioned at two opposite sides of the first negative electrode.

Optionally, the first negative electrode is connected with the second negative electrodes.

Optionally, the cross-sectional area of the first negative electrode is greater than that of each of the second negative electrodes.

Optionally, the thickness of the first negative electrode is greater than that of each of the second negative electrodes.

Optionally, the thickness of the first solid-state electrolyte is lower than that of each of the second solid-state electrolytes.

The above design is adopted because of although the roughness of the second solid-state electrolytes are greater than that of the first solid-state electrolyte, but due to its greater thickness, the situation that the negative dendrite pierces the solid-state electrolyte is avoided.

Due to the cross-sectional area of the first negative electrode is greater than that of the second negative electrodes, the distance between the second negative electrodes and the positive electrode is greater than that between the first negative electrode and the positive electrode. Thus, the unfavorable factors of short circuit easily caused by the greater roughness of the second solid-state electrolytes are partially offset. Since the distance between the second negative electrodes and the positive electrode increases, the possibility of lithium dendrite passing through the solid-state electrolytes becomes lower, and the greater roughness brings the beneficial effect of increasing the adhesion between the solid-state electrolytes and the negative electrode.

It should be further explained that safety and bonding strength should be considered comprehensively when designing the difference between the surface roughness of the first solid-state electrolyte and the roughness of the second solid-state electrolytes. Within a reasonable range, the greater roughness will increase the bonding strength between the solid-state electrolytes and the negative electrode, but if the roughness is too large, it will promote the formation of lithium dendrite, which will lead to short circuit, while if the roughness is too small, it will be the opposite. Although the safety is guaranteed, the bonding strength is not strong and it is easy to fall off. Therefore, the design of the roughness of the first solid-state electrolyte is mainly satisfied with the safety, while the roughness of the second solid-state electrolytes mainly consider the adhesive force. Since the distance between the second negative electrodes and the positive electrode is farther than that between the first negative electrode and the positive electrode, the safety can still be ensured even if the roughness is increased.

Therefore, it is advantageous to design that the surface roughness of the second solid-state electrolytes are greater than that of the first solid-state electrolyte in the present application. Roughness can be adjusted according to the actual formulation system. Optionally, the numerical range of surface roughness of the first solid-state electrolyte is 0.1-30 µm, such as 0.5 µm, 1 µm, 3 µm, 5 µm, 7 µm, 9 µm, 11 µm, 13 µm, 15 µm, 17 µm, 19 µm, 21 µm, 23 µm, 25 µm, 27 µm or 27 µm, etc. The numerical range of the surface roughness of the second solid-state electrolytes are 0.1-50 µm, such as 1 µm, 5 µm, 10 µm, 15 µm, 20 µm, 25 µm, 30 µm, 35 µm, 40 µm or 45 µm, etc.

However, it should be noted that the roughness of the first solid-state electrolyte is not the low the better. Experiments show that too low roughness of the solid-state electrolytes will promote the formation of lithium dendrites, which will affect the safety.

The powder pressing process is usually used for bonding between the existing electrodes and between the existing electrode and the solid-state electrolyte. Therefore, the appropriate roughness difference between electrodes and solid-state electrolyte is beneficial to improve the bonding strength, but the excessive roughness difference will affect the bonding strength. Meanwhile, in the present application, due to the first solid-state electrolyte and the second solid electrolyte have different adhesion forces with the negative electrode, during actual use, with the expansion of the negative electrode, the stress reserved between the negative electrode and the first and second solid-state electrolytes will gradually accumulate. Therefore, in the present application, optionally, the difference between the roughness of the second solid-state electrolytes and that of the second negative electrodes is 100-500% greater than the difference between the roughness of the first solid-state electrolyte and that of the first negative electrode, such as 150%, 200%, 250%, 300%, 350%, 400% or 450%, etc. Optionally, the roughness of the first solid-state electrolyte and the second solid-state electrolytes not only satisfy that the difference between the roughness of the second solid-state electrolytes and the roughness of the second negative electrodes is 100-500% greater than that of the first solid-state electrolyte and the first negative electrode, but also satisfies that the roughness of the second solid-state electrolytes are 30-150% greater than that of the first solid-state electrolyte. For example, 40%, 50%, 60%, 70%, 80%, 90%, 100%, 110%, 120%, 130% or 140%, etc. So that the adhesive force and stress accumulation between the solid-state electrolytes and the negative electrode can be properly handled, and the stress concentration will not occur during the service life of the battery.

Optionally, the difference between the roughness of the second solid-state electrolytes and that of the second negative electrodes is 200-300% greater than greater than the difference between the roughness of the first solid-state electrolyte and that of the first negative electrode, and the roughness of the second solid-state electrolytes are 50-100% greater than that of the first solid-state electrolyte, which further improves the security of the battery.

Optionally, the length of the second negative electrodes are greater than that of the second solid-state electrolytes.

Optionally, protruding structures are provided on the side of the second negative electrodes which are face away from the first negative electrode, and the protruding structures are not in contact with the second solid-state electrolytes.

Optionally, the protruding structures contact with the bonding layer to form a contact interface.

Optionally, the protruding structures do not contain active substances.

Here, the length of the second negative electrodes are longer than that of the second solid-state electrolytes. Therefore, the second negative electrodes also include protruding structures which are not in contact with the second solid-state electrolytes. The protruding structures contact with the bonding layer to form a contact interface.

The roughness of the protruding structures here may be different from that of the portion of the second negative electrodes contact with the second solid-state electrolytes. Optionally, the roughness of the protruding structures are greater than that of the portion of the second negative electrodes contact with the second solid-state electrolytes.

The roughness of the portion of the electrode that contacts with the solid-stat electrolyte must be strictly controlled. Excessive roughness is detrimental to the performance of the battery. For the protruding structure, it does not absorb or accept lithium ions, therefore, its roughness will not affect the battery performance, but the improvement of the roughness can improve the bonding strength between the negative electrode and the bonding layer. Therefore, it is advantageous to improve the roughness within a reasonable range. Optionally, the roughness of the protruding structure is less than 30% of the thickness of the protruding structure, For example, 5%, 10%, 15%, 20% or 25%, etc.

Optionally, the protruding structure and the portion of the positive electrode which corresponding to the protruding structure are not provided with an active substance layer.

Optionally, the roughness of the portions of the second negative electrodes contacts with the second solid-state electrolytes are greater than that of the first negative electrode.

The above roughness refers to arithmetic average roughness.

Optionally, the bonding layer comprises insulating resin materials and insulating and thermally-conductive materials.

Optionally, the insulating resin materials comprise any one or a combination of at least two of thermosetting resin, photocurable resin or electron beam curable resin. The combination exemplarily comprises a combination of thermosetting resin and photocurable resin, a combination of electron beam curable resin and thermosetting resin or a combination of photocurable resin and electron beam curable resin, etc.

Optionally, the photocurable resin comprises a UV curable resin.

Optionally, the insulating resin materials comprise any one or a combination of at least two of epoxy resin, acrylic resin, polyimide resin, polyester resin, polypropylene resin, polyamide resin, polystyrene resin, polyvinyl chloride resin or polycarbonate resin. The combination exemplarily comprises a combination of epoxy resin and acrylic resin, a combination of polyimide resin and polyester resin, a combination of polypropylene resin and polyamide resin or a combination of polystyrene resin, polyvinyl chloride resin and polycarbonate resin, etc.

The bonding layer in the present application adopts the insulating resin materials, which have good insulation and good adhesion with electrodes.

The bonding layer also comprises insulating and thermally-conductive materials. Optionally, the insulating and thermally-conductive materials comprises any one or a combination of at least two of aluminum oxide, aluminum nitride, silicon nitride or silicon carbide, and the combination exemplarily comprises a combination of aluminum oxide and aluminum nitride or a combination of silicon nitride and silicon carbide, etc.

The thermal conductivity of traditional insulating resin materials is poor, and the heat accumulated inside the battery will not be effectively discharged during the use of the battery, which adversely affects the overall performance and service life of the batteries. It can even affect the safe use of batteries. However, in the present application, adding a certain amount of insulating and thermally-conductive materials into the insulating resin materials can significantly improve the thermal conductivity of the bonding layer, and maintain the insulation performance of the bonding layer, significantly improve the thermal conductivity of the bonding layer, and play a positive role in the overall heat dissipation of the batteries.

Optionally, the solid-state electrolytes in the solid-state electrolyte layer comprise inorganic solid-state electrolyte and/or polymer solid-state electrolyte.

Optionally, the mass percentage of insulating and thermally-conductive materials in the bonding layer is 10-30%, such as 12%, 15%, 18%, 20%, 22%, 25% or 28%, etc.

The amount of insulating and thermally-conductive materials in the bonding layer in the present application is within the above range, which can obtain high thermal conductivity while maintaining excellent insulation. When the mass percentage of insulating and thermally-conductive materials in the bonding layer is less than 10%, due to there are too few thermally-conductive and insulating materials, and a continuous thermal conductive path cannot be formed in the bonding layer. When the mass percentage of insulating and thermally-conductive materials in the bonding layer is more than 30%, it will affect the flowing state of the resin, the coating efficiency and effect, and then the adhesive force between the bonding layer and the laminate will be weakened.

Optionally, the particle size of the insulating and thermally-conductive materials are ≤ 1 µm, such as 0.1 µm, 0.3 µm, 0.5 µm or 0.8 µm, etc. When the particle size of insulating and thermally-conductive materials are greater than 1 µm, the injection efficiency and coating effect of the bonding layer will be affected, and then the overall performance of the battery will be affected.

In order to further improve the heat dissipation effect, the thermal analysis shows that the heat accumulation in the bonding layer near the protruding part is more serious than that far away from the protruding structure. Therefore, especially when the protruding part does not comprise active substances and the copper foil directly contact with the resin in the bonding layer, the excessive concentrated heat accumulation may cause the resin to melt. Therefore, on the one hand, a concentration gradient of the insulating and thermally-conductive materials can be set in the bonding layer, to make the bonding layer which near the protruding structure contains more insulating and thermally-conductive materials, so as to transfer heat to the outside of the bonding layer more quickly and prevent heat accumulation. Optionally, the insulating and thermally-conductive materials in the bonding layer exhibits a concentration gradient distribution. Optionally, starting from a surface adjacent to the protruding structure in the bonding layer, the concentration gradient of the insulating and thermally-conductive materials are distributed in a decreasing manner. Optionally, two concentration gradients are arranged in the bonding layer. And in the first layer, the mass percentage of the insulating and thermally-conductive materials with the first concentration gradient and adjacent to the protruding structure is 40-45%, such as 41%, 42%, 43% or 44%,etc. In the second layer, the mass percentage of the insulating and thermally-conductive materials with the second concentration gradient and on one side of the first concentration gradient which opposite to the protruding structure is 15-20%, such as 16%, 17%, 18% or 19%,etc. The thickness of the first and second layers can be adjusted according to the actual heat dispersion, the shape of the protrusion and the shape of the bonding layer.

Optionally, the surface of the current collector of the protruding structure is coated with rubber. On the one hand, the bonding strength between the foil and the insulating resin is improved, on the other hand, the heat is absorbed by the heat absorption capacity and phase transformation of the rubber, so as to avoid the melting and decomposition of the insulating resin materials.

Optionally, the materials of the solid-state electrolytes between the positive electrode and the negative electrode can be any one or a combination of at least two of sulfide solid electrolyte materials, oxide solid electrolyte materials or polymer solid electrolyte materials.

In the present application, the materials of the solid-state electrolyte between the positive electrode and the negative electrode may be crystalline or amorphous. In addition, the solid-state electrolytes may be glass or crystallized glass.

The thickness of the solid-state electrolyte layer in the present application is 1-1000 µm; For example, 2 µm, 5 µm, 10 µm, 30 µm, 50 µm, 100 µm, 200 µm, 300 µm, 400 µm, 500 µm, 600 µm, 700 µm, 800 µm or 900 µm, etc., optionally, 4-50 µm.

In the present application, the thickness of the solid-state electrolyte layer is controlled within the above range, which can not only meet the trend of thinning the solid-state electrolyte layer in all-solid batteries, but also effectively avoid the risk of anode and cathode short circuit caused by dendrite, and improve the safety of the battery during use.

Optionally, the positive electrode comprises a current collector and a positive electrode active substance layer which is positioned on the surface of the current collector.

Optionally, the thickness of the positive active substance layer is 1-1000 µm, such as 2 µm, 5 µm, 10 µm, 50 µm, 100 µm, 200 µm, 300 µm, 400 µm, 500 µm, 600 µm, 700 µm, 800 µm or 900 µm, etc.

Optionally, the negative electrode comprise a current collector and a negative electrode active substance layer positioned on the surface of the current collector.

Optionally, the shape of the current collector comprises a foil sheet.

Optionally, the current collector comprises any one of aluminum, copper, nickel or zinc.

Optionally, the current collector comprises any one of aluminum alloy, copper alloy, nickel alloy or zinc alloy.

Optionally, the current collector of the positive electrode is aluminum. Optionally, the current collector of the negative electrode are copper.

Optionally, the positive active substances in the positive active substance layer comprises an oxide active materials.

Optionally, the oxide active substances comprise any one or a combination of at least two of rock salt layered active substances, spinel active substances or olivine active substances. The combination exemplarily comprises a combination of rock salt layered active substances and spinel active substances, a combination of olivine active substances and rock salt layered active substances or a combination of spinel active substances and olivine active substances, etc.

Optionally, the surface of the positive active substance layer is coated with a coating.

Optionally, the coating contains conductive oxide of lithium ion.

Optionally, the conductive oxide of lithium ion comprises any one or a combination of at least two of *LiNbO*₃, *Li*₃*PO*₄ or LiPON. The combination exemplarily comprises a combination of LiNbO₃ and Li₃PO₄, a combination of LiPON and LiNbO₃ or a combination of Li₃PO₄ and LiPON, etc.

Optionally, the thickness of the coating is 1-20nm, such as 2nm, 5nm, 8nm, 10nm, 12nm, 15nm or 18nm, etc.

The coating on the surface of the positive electrode active substance layer in the present application can obviously inhibit the reaction between the positive electrode active substance layer and the solid-state electrolyte material layer, thereby improving the performance of the battery.

Optionally, the positive active substance layer also comprises bonding materials.

Optionally, the bonding materials comprise fluorine-containing bonding materials.

Optionally, the fluorine-containing bonding materials comprise polyvinylidene fluoride.

Optionally, the positive electrode active substance layer also comprises conductive materials.

Optionally, the conductive materials comprise any one or a combination of at least two of acetylene black, ketjen black, super-P or carbon fiber; The combination exemplarily comprises a combination of acetylene black and ketjen black or a combination of super-P and carbon fiber, etc.

In the present application, conductive materials are added to the positive electrode active substance layer and the negative electrode active substance layer, which can obviously improve the conductivity of the positive electrode active substance layer and the negative electrode active substance layer, and further improve the service performance of the battery.

Optionally, the positive active substance layer also comprises solid-state electrolyte materials.

The solid-state electrolyte materials in the positive electrode active substance layer described in the present application can adopt the solid-state electrolyte materials in the solid-state electrolyte layer. The solid-state electrolyte materials in the positive electrode active substance layer can be the same as that in the solid-state electrolyte layer.

Optionally, the solid-state electrolyte materials comprise oxide solid electrolyte and/or sulfide solid electrolyte.

Optionally, the negative active substance in the negative active substance layer comprises any one or a combination of at least two of metal active substances, carbon active substances or oxide active substances. The combination exemplarily comprises a combination of metal active substances and carbon active substances, a combination of oxide active substances and metal active substances, or a combination of carbon active substances and oxide active substances.

Optionally, the metal active substances comprises any one or a combination of at least two of Si, Sn, In, Si-Al alloys or Si-In alloys.

Optionally, the carbon active substances comprises any one or a combination of at least two of graphite, hard carbon or soft carbon. The combination exemplarily comprises a combination of graphite and hard carbon, a combination of graphite and soft carbon or a combination of hard carbon and soft carbon, etc.

Optionally, the oxide active substances comprises *Li*₄*Ti*₅*O*₁₂.

The all-solid-state laminated battery described in the present application is prepared by the following method. The method comprises stacking the positive electrode, the solid-state electrolyte layer and the negative electrode, then putting them into a container, pouring the molten bonding layer material, and forming a bonding layer at the edges of the positive electrode, the negative electrode and the solid-state electrolyte layer. The method is a known method in the prior art (CN107452985A) and will not be repeated here.

The adjustment of the roughness of the positive electrode, the negative electrode and the solid-state electrolyte layer in the present application adopts the following methods, specifically including:
(1) Adjustment of the roughness of the positive electrode and the negative electrode;
   The smaller the particle size (average particle size D50) of the positive active substances in the positive active substance layers and the negative active substances in the negative active substance layers, the smaller the roughness of the positive and negative active substance layers. The smaller the viscosity of the bonding materials in the positive electrode active substance layer and the negative electrode active substance layer, the smaller the roughness of the positive electrode active substance layer and the negative electrode active substance layer. Meanwhile, increasing the sintering pressure of the positive and negative active substance layers is beneficial to reducing the roughness of the positive and negative active substance layers.
(2) Adjustment of the roughness of the solid-state electrolyte layer;

The roughness of the solid-state electrolyte layer can be adjusted by adjusting the particle size of the solid-state electrolyte materials. At the same time, conventional surface treatment processes such as sand blasting, grinding, rolling and coating can be used to obtain the required surface roughness. For the polymer solid-state electrolyte, the viscosity of polymer solid-state electrolyte can be adjusted by adjusting the molecular weight, and then the roughness of solid-state electrolyte layer can be adjusted.

The method of manufacturing the first solid-state electrolyte or the second solid-state electrolytes with different roughness is not particularly limited in the present application. After the positive electrode or the negative electrode are coated with the solid-state electrolytes, the first solid-state electrolyte and the second solid-state electrolytes are spectively processed by conventional surface processing techniques such as rolling, and the first solid-state electrolyte and the second solid-state electrolytes with desired surface roughness can be obtained respectively.

A first solid-state electrolyte or second solid-state electrolytes with different compositions can also be used to obtain the desired first and second solid electrolytes with different roughness.

The measurement of the roughness of the positive electrode, the negative electrode and the solid-state electrolyte layer in the present application specifically includes:
Optionally, the roughness of the protruding structure is designed to be different from that of the positive electrode, the second negative electrodes and the second solid-state electrolytes, so as to improve the bonding strength between the positive electrode and the bonding layer, and between the negative electrode and the bonding layer.

Compared with the prior art, the application has at least the following beneficial effects.

The bonding layer in the all-solid-state laminated battery in the present application comprises insulating and thermally-conductive materials, which can obviously improve the thermal conductivity of the bonding layer, and so that the heat generated in the use process of the all-solid-state laminated battery can be quickly dissipated through the bonding layer, thereby the cycle performance of the all-solid-state laminated battery can be improved.

### Brief Description of the Drawings

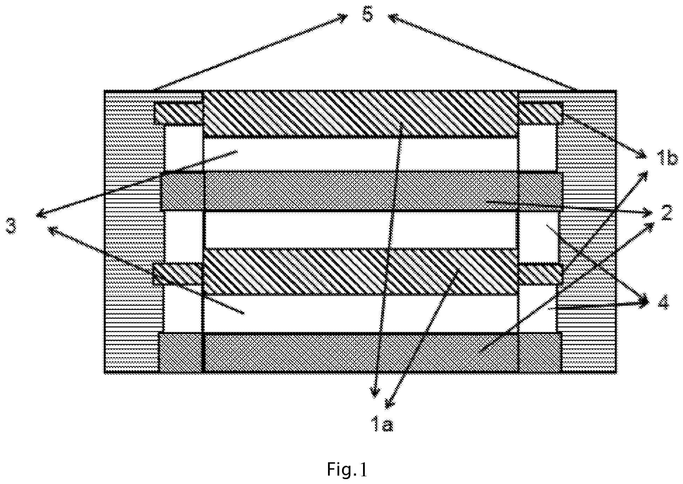

FIG. 1 is a schematic diagram of the structure of the all-solid-state laminated battery described in embodiment 1 of the present application;
1a-the first negative electrode, 1b-the second negative electrodes, 2-the positive electrode, 3-the first solid-state electrolyte, 4-the second solid-state electrolytes, 5- the bonding layer.

### Detailed Description

The technical scheme of the present application will be further explained by specific embodiments below. It should be known to those skilled in this art that the examples are only to help understand the application, and should not be regarded as specific limitations of the application.

The structural schematic diagram of the all-solid-state laminated battery described in the present application is shown in Figure 1. It can be seen from Figure 1 that the all-solid-state laminated battery comprises a positive electrode and a negative electrode which are oppositely arranged, and the figure comprises two positive electrodes and two negative electrodes. There is a solid-state electrolyte layer positioned between the positive electrodes and the negative electrodes, and each negative electrode comprises a first negative electrode 1a and second negative electrodes 1b which is positioned on both sides of the first negative electrode 1a. The solid-state electrolyte layer comprises a first solid-state electrolyte 3 which is positioned between the first negative electrode 1a and the positive electrode 2 and second solid-state electrolytes 4 which is positioned between the second negative electrodes 1b and the positive electrode 2. The length of the second negative electrodes are longer than that of the second solid electrolyte. The length of the positive electrode is longer than the sum of the length of the first solid-state electrolyte and the length of the second solid-state electrolytes. The second negative electrodes and the positive electrode form a protrusion at edges with respect to the second solid-state electrolytes. The protrusion is covered with a bonding layer 5, and the bonding layer is bonded with the protrusion to form a contact interface.

### embodiment 1

The embodiment provides a laminated battery, which comprises a plurality of positive and negative electrode bodies. The electrode bodies comprise a positive electrode, a negative electrode and solid-state electrolytes which are positioned between the positive electrode and the negative electrode. The negative electrode comprises a first negative electrode and two second negative electrodes. The two second negative electrodes are respectively positioned on opposite sides of the first negative electrode and are connected with the first negative electrode. The solid-state electrolytes comprises a first solid-state electrolyte and two second solid-state electrolytes. The first solid-state electrolyte is positioned between the positive electrode and the first negative electrode, the second solid-state electrolytes are positioned between the positive electrode and the second negative electrodes. A second negative electrode corresponds to a second solid-state electrolyte. And the roughness of each second solid-state electrolyte is greater than that of the first solid-state electrolyte.

There are two second negative electrodes with roughness of 8 µm and thickness of 120 µm; The first negative electrode has a roughness of 10 µm and a thickness of 150 µm.

The current collectors of the first and second negative electrodes are both copper foil, and the negative active substance layer on the current collector is composed of 60wt% carbon fiber and 40wt% polytetrafluoroethylene.

The current collector of the positive electrode is aluminum foil, and the composition of the positive electrode active substance layer on the current collector is 50wt% *LiCoO*₂, 20wt% conductive carbon black and 30wt% polytetrafluoroethylene, and the thickness of the positive electrode active substance layer is 150 µm.

The materials of the first solid-state electrolyte are 50wt%*Li*₇*La*₃*Zr*₂*O*₁₂; 30wt% lithium perchlorate; 20wt% polyethylene oxide. The thickness of the first solid-state electrolyte is 100 µm and the roughness of the first solid-state electrolyte is 12 µm; The materials of the two second solid-state electrolytes are both 50wt%*Li*₇*La*₃*Zr*₂O₁₂; 30wt% lithium perchlorate; 20wt% polyethylene oxide. The thickness of the two second solid-state electrolytes are 150 µm and the roughness of the two second solid-state electrolytes are 18 µm.

The structural schematic diagram of the all-solid-state battery provided by the present embodiment is shown in Figure 1. The negative electrode comprise a first negative electrode 1a and two second negative electrodes 1b. The two second negative electrodes 1b are respectively positioned on opposite sides of the first negative electrode 1a and are connected with the first negative electrode 1a. The solid-state electrolytes comprises a first solid-state electrolyte 3 and two second solid-state electrolytes 4. The first solid-state electrolyte 3 is positioned between the positive electrode 2 and the first negative electrode 1a, and the second solid-state electrolytes 4 are positioned between the positive electrode 2 and the second negative electrodes 1b.

The embodiment also provides a preparation method of the all-solid-state battery, which comprises the following steps.

Preparing an aluminum foil, and mixing the formula amount of positive active material*LiCoO*₂ and conductive carbon black with the bonding materials solution which dissolved in N-methylpyrrolidone to obtain the positive active layer slurry, then coating the positive active layer slurry on the outer surface of the aluminum foil with a coating machine, and drying to obtain positive electrode.

Coating the solid-state electrolytes slurry on the positive electrode. The coating thickness is 100 µm on the part corresponding to the first negative electrode to form the first solid-state electrolyte; The coating thickness is 150 µm on the part corresponding to the second negative electrodes to form the second solid-state electrolytes; Drying the solid-state electrolyte slurry after the coating is finished. And then respectively carrying out the surface treatment on the first solid-state electrolyte and the second solid-state electrolytes by conventional grinding process, so that the roughness of the second solid-state electrolytes are greater than that of the first solid-state electrolyte, and the anode- solid-state electrolyte composite electrode is obtained.

Preparing a copper foil, and mixing a carbon material and a bonding material in a prescribed amount into a negative electrode coating composition. The negative electrode coating composition is coated on the corresponding copper foil by the coating method, and the thickness of the active material layer of the second negative electrode is 50 µm thinner than that of the first negative electrode active material layer, and the roughness of the protrusion of the negative electrode is 15 µm, Drying the negative electrode coating composition after the coating is finished to obtain the negative electrode pieces.

Laminating the anode-solid-state electrolyte composite electrode to the negative electrode pieces to obtain the all-solid-state lithium ion battery.

In the present embodiment, the length of the positive electrode is 50mm, the length of the first negative electrode is 40mm, the length of the second negative electrodes are 10mm, the length of the first solid-state electrolyte is 5mm, the length of the second solid-state electrolytes are 3mm, and the number of the layers of the laminate is 4 (including four positive electrodes, negative electrodes and solid-state electrolytes). Clamp the laminate of the battery with a tool and put it into a container, and then coat the molten epoxy resin with a nozzle. After coating, take out the laminate of the battery, and then heat and cure it to obtain the laminate resin coated with epoxy resin on the side. In the present embodiment, the epoxy resin comprises 15wt% alumina.

### embodiment 2

The difference between the present embodiment and the embodiment 1 is that the edge of the current collector of the protrusion of the second negative electrodes are coated with rubber, and other conditions are completely the same as those of the embodiment 1.

### Comparative example 1

The difference between the present comparative example and the embodiment 1 is that the bonding layer does not comprise insulating and thermally-conductive materials, that is, the epoxy resin used in the bonding layer does not comprise alumina, and other conditions are completely the same as those of the embodiment 1.

### performance testing:

Carrying out the cyclic performance tests on the all-solid-state laminated batteries obtained from the embodiments and the comparative example (Testing the rate performance of the battery under the environment of 60-80 °C. The charge rate is 5C, the discharge rate is 10C and the voltage range is 3-4.3v).

For the battery that has been tested for 100 cycles, observe the adhesion between the solid-state electrolytes and the first and second negative electrodes of the battery, and observe the adhesion between the first solid-state electrolyte and the second solid-state electrolytes.

It can be seen from the observation that the performance of the battery is improved after the rubber layer is arranged on the protrusion. For the battery with no heat conductive material in the resin, the performance of the electrode drops rapidly due to the concentration of thermal stress.

**table1**

| | First efficiency | Capacity retention rate after 10 laps | Capacity retention rate after 20 laps | Capacity retention rate after 30 laps |
|---|---|---|---|---|
| Embodiment 1 | 92 | 99.4 | 98.3 | 96.2 |
| Embodiment 2 | 93 | 99.8 | 99.1 | 96.8 |
| comparative example 1 | 90 | 98.3 | 97.9 | 94.2 |

It can be seen from the above table that the first efficiency and cycle retention rate of the laminated battery described in the present application are improved by adding the insulating and thermally-conductive materials to the bonding layer. At the same time, setting the rubber layer on the protrusion can effectively improve the first efficiency and cycle performance of the laminated battery.

The applicant declares that the above is only the specific implementation of the present application, but the scope of protection of the present application is not limited to this.

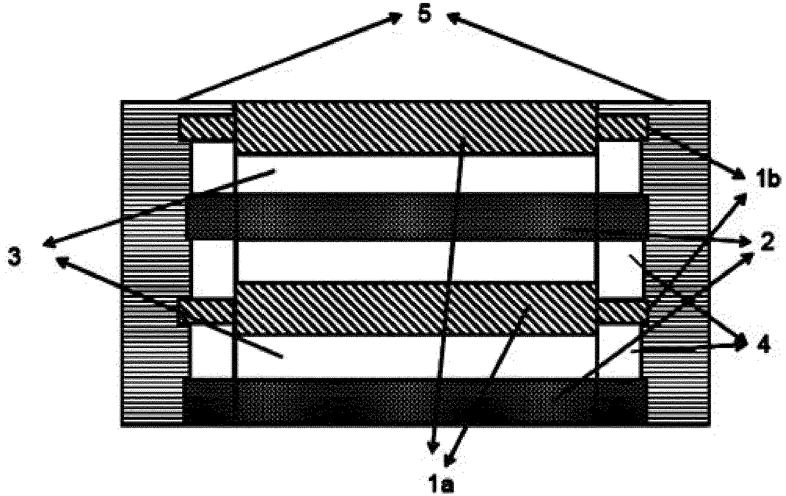

## Claims

1. An all-solid-state laminated battery, which comprises a positive electrode and a negative electrode which are oppositely arranged, and a solid-state electrolyte layer which is positioned between the positive electrode and the negative electrode, a bonding layer is provided outside of the edges of the negative electrode, of the solid-state electrolyte layer, and of the positive electrode, the bonding layer comprises insulating and thermally-conductive materials.

2. The all-solid-state laminated battery according to claim 1, wherein the insulating and thermally-conductive materials comprises any one or a combination of at least two of aluminum oxide, aluminum nitride, silicon nitride or silicon carbide.

3. The all-solid-state laminated battery according to claim 1 or 2, wherein the mass percentage of insulating and thermally-conductive materials in the bonding layer are 10-30%.

4. The all-solid-state laminated battery according to any one of claims 1 to 3, wherein the number of layers of the positive electrode is ≥2 layers;
Optionally, the number of layers of the negative electrode is ≥2 layers;
Optionally, the negative electrode comprises a first negative electrode and second negative electrodes which are positioned on both sides of the edge of the first negative electrode, and the cross-sectional area of the second negative electrodes are less than that of the first negative electrode;
Optionally, the solid-state electrolyte layer comprises a first solid-state electrolyte which is positioned between the positive electrode and the first negative electrode and second solid-state electrolytes which are positioned between the positive electrode and the second negative electrodes;
Optionally, the thickness of the second solid-state electrolytes are greater than that of the first solid-state electrolyte;
Optionally, the roughness of the part of the second negative electrodes which are in contact with the second solid electrolyte are greater than that of the first negative electrode;
Optionally, the difference between the roughness of the second solid-state electrolytes and that of the second negative electrodes is greater than the difference between the roughness of the first solid-state electrolyte and that of the first negative electrode;
Optionally, the difference between the roughness of the second solid-state electrolytes and that of the second negative electrodes is 100-500% greater than the difference between the roughness of the first solid-state electrolyte and that of the first negative electrode, and optionally 200-300%;
Optionally, the roughness of the second solid-state electrolytes are 30-150% greater than that of the first solid-state electrolyte, optionally 50-100%;
Optionally, the length of the second negative electrodes are greater than that of the second solid-state electrolytes;
Optionally, protruding structures are provided on the side of the second negative electrodes which are face away from the first negative electrode, and the protruding structures are not in contact with the second solid-state electrolytes;
Optionally, the protruding structures contact with the bonding layer to form a contact interface;
Optionally, the protruding structures do not contain active substances.

5. The all-solid-state laminated battery according to claim 4, wherein the roughness of the protruding structures are different from that of the second negative electrodes and the second solid-state electrolytes;
Optionally, the roughness of the protruding structures are greater than that of the portions of the second negative electrodes which are contacts with the second solid-state electrolytes;
Optionally, the protruding structures and the portions of the positive electrode which corresponding to the protruding structures are not provided with an active material layer.

6. The all-solid-state laminated battery according to any one of claims 1 to 5, wherein the bonding layer comprises insulating resin materials;
Optionally, the insulating resin material comprises any one or a combination of at least two of thermosetting resin, photocurable resin or electron beam curable resin;
Optionally, the insulating resin materials comprises any one or a combination of at least two of epoxy resin, acrylic resin, polyimide resin, polyester resin, polypropylene resin, polyamide resin, polystyrene resin, polyvinyl chloride resin or polycarbonate resin;
Optionally, the solid-state electrolytes in the solid-state electrolyte layer comprises inorganic solid-state electrolyte and/or polymer solid-state electrolyte.

7. The all-solid-state laminated battery according to any one of claims 1 to 6, wherein the particle size of the insulating and thermally-conductive material is ≤1 µm;
Optionally, the insulating and thermally-conductive materials in the bonding layer exhibits a concentration gradient distribution;
Optionally, starting from a surface adjacent to the protruding structure in the bonding layer, the concentration gradient of the insulating and heat-conducting material is distributed in a decreasing manner;
Optionally, two concentration gradients are arranged in the bonding layer, which comprises a first concentration gradient adjacent to the protruding structure and a second concentration gradient on the side of the first concentration gradient which is opposite to the protruding structure;
The mass percentage of the insulating and thermally-conductive materials in the first concentration gradient is 40-45%, and the mass percentage of the insulating and thermally-conductive materials in the second concentration gradient is 15-20%;
Optionally, the surface of the current collector of the protruding structure is coated with rubber.

8. The all-solid-state laminated battery according to any one of claims 1 to 7, wherein the thickness of the solid-state electrolyte layer is 1-1000 µm; Optionally 4-50 µm.

9. The all-solid-state laminated battery according to any one of claims 1 to 8, wherein the positive electrode comprises a current collector and a positive electrode active material layer which is positioned on the surface of the current collector;
Optionally, the position on the current collector of the positive electrode opposite to the protruding structure does not contain the positive electrode active substance layer;
Optionally, the thickness of the positive active substance layer is 1-1000 µm;
Optionally, the negative electrode comprises a current collector and a negative electrode active substance layer positioned on the surface of the current collector.

10. The all-solid-state laminated battery according to any one of claims 1 to 9, wherein the current collector comprises any one of aluminum, copper, nickel or zinc;
Optionally, the current collector comprises any one of aluminum alloy, copper alloy, nickel alloy or zinc alloy;
Optionally, the current collector of the positive electrode is aluminum;
Optionally, the current collector of the negative electrode is copper.

11. The all-solid-state laminated battery according to claims 9 or 10, wherein the positive active material in the positive active material layer comprises an oxide active material;
Optionally, the surface of the positive active material layer is coated with a coating;
Optionally, the coating contains conductive oxide of lithium ion;
Optionally, the conductive oxide of lithium ion comprises any one or a combination of at least two of *LiNbO*₃, *Li*₃*PO*₄ or LiPON;
Optionally, the thickness of the coating is 1-20nm;
Optionally, the positive active material layer also comprises a bonding material;
Optionally, the bonding material comprises a fluorine-containing bonding material;
Optionally, the fluorine-containing bonding material comprises polyvinylidene fluoride;
Optionally, the positive electrode active material layer also comprises a conductive material;
Optionally, the conductive material comprises any one or a combination of at least two of acetylene black, ketjen black, super-P or carbon fiber;
Optionally, the positive active material layer also comprises a solid-state electrolyte material;
Optionally, the solid-state electrolyte material comprises oxide solid electrolyte and/or sulfide solid electrolyte.

12. The all-solid-state laminated battery according to any one of claims 9 to 11, wherein the negative active material in the negative active material layer comprises any one or a combination of at least two of metal active materials, carbon active materials or oxide active materials;
Optionally, the metal active materials comprises any one or a combination of at least two of Si, Sn, In, Si-Al alloys or Si-In alloys;
Optionally, the carbon active materials comprises any one or a combination of at least two of graphite, hard carbon or soft carbon;
Optionally, the oxide active substances comprise *Li*₄*Ti*₅*O*₁₂.
